Europäisches Patentamt

**European Patent Office**

**Office européen des brevets**

(11) Numéro de publication: **0 055 662
B1**

(12) **FASCICULE DE BREVET EUROPEEN**

(45) Date de publication du fascicule du brevet: **17.04.85**

(21) Numéro de dépôt: **81402041.8**

(22) Date de dépôt: **21.12.81**

(51) Int. Cl.⁴: **G 12 B 5/00,** H 04 N 5/64, H 05 K 7/18

(54) **Système de visualisation ergonomique à correction automatique de la distance de lecture en fonction de l'inclinaison du visuel.**

(30) Priorité: **30.12.80 FR 8027771**

(43) Date de publication de la demande:
**07.07.82 Bulletin 82/27**

(45) Mention de la délivrance du brevet:
**17.04.85 Bulletin 85/16**

(84) Etats contractants désignés:
**DE FR GB IT NL**

(56) Documents cités:
**DE-A-2 849 241
FR-A-1 270 322
FR-A-2 373 103
US-A-3 570 799**

(73) Titulaire: **COMPAGNIE INTERNATIONALE POUR L'INFORMATIQUE CII - HONEYWELL BULL (dite CII-HB)
94, avenue Gambetta
F-75020 Paris (FR)**

(72) Inventeur: **Deprez, Michel
94 avenue Gambetta
F-75020 Paris (FR)**
Inventeur: **Fromion, André
94 avenue Gambetta
F-75020 Paris (FR)**
Inventeur: **Hardouin, Claude, Pierre, Michel
94, Avenue Gambetta
F-75020 Paris (FR)**
Inventeur: **Vilas Boas, Jean Claude
94 Avenue Gambetta
F-75020 Paris (FR)**

Courier Press, Leamington Spa, England.

EP 0 055 662 B1

## Description

La présente invention concerne les dispositifs de visualisation associés aux systèmes de traitement de données ou analogues. Plus précisément elle a pour objet un visuel orientable en fonction de la taille de l'opérateur pour lequel la distance séparant l'oeil de l'opérateur de la surface de lecture est corrigée en fonction de l'inclinaison du visuel.

Les visuels jouent un rôle de plus en plus important dans les systèmes d'entrée-sortie de données et sont utilisés pendant des périodes importantes par les opérateurs. Aussi les constructeurs ont-ils essayé de réaliser des visuels satisfaisant les besoins ergonomiques des utilisateurs. Pour cela ils sont arrivés à des systèmes complexes et coûteux ne satisfaisant pas tous les critères de bonne lecture des visuels et encore cela au prix de réglages longs et fastidieux.

Le brevet FR—A—1 270 322 décrit un boîtier porte-instrument mobile autour d'un axe horizontal et suspendu sur un piètement auquel deux ailes verticales donnent la forme de U, ledit axe horizontal passant sensiblement dans la région du centre de gravité du boîtier.

L'invention propose un système de visualisation comportant un dispositif très simple de suspension à auto réglage permettant de corriger automatiquement la distance de lecture du système de visualisation en fonction de son inclinaison.

A cet effet elle a donc pour objet un système de visualisation constitué d'un visuel mobile autour d'un axe horizontal et suspendu sur un piètement auquel deux ailes verticales donnent la forme de U, ledit axe horizontal passant sensiblement dans la région du centre de gravité du visuel caractérisé en ce qu'il comporte:

— des moyens pour assurer ladite suspension rotative du visuel constitués par deux tenons cylindriques et respectivement fixés sur deux côtés opposés du visuel et venant chacun s'insérer dans un saignée en forme de L pratiquées dans un des ailes du U du piètement les branches verticales des L venant déboucher à la partie supérieure des ailes du U de manière à permettre l'insertion desdits tenons cylindriques et le branches horizontales des L permettant un mouvement additionnel de translation horizontal du visuel, et
— des moyens de coordination des mouvements du visuel constitués par des tenons de guidage additionnels fixés sur lesdits côtés du visuel et insérés dans des saignées aditionnelles pratiquées dans les ailes du U du piètement, la direction générale desdites saignées étant inclinée sur l'horizontale de manière à ce que tout mouvement de basculement du visuel entraîne un déplacement des tenons de guidage dans lesdites saignées inclinées, ce qui provoque à son tour un déplacement desdits tenons cylindriques le long des branches horizontales desdites saignées en forme de L et ainsi un mouvement associé de translation horizontal dudit visuel.

Selon un autre aspect de l'invention les tenons de guidage sont mobiles pour permettre l'introduction ou l'extraction du visuel de son piètement.

Suivant une autre caractéristique de l'invention les tenons de guidage viennent se placer dans des alvéoles pour immobiliser le visuel dans une position choisie par l'opérateur.

Les figures 1 et 2 représentent les problèmes ergonomiques rencontrés dans l'état actuel de la technique.

La figure 3 représente un visuel avec ses manetons de suspension.

La figure 4 représente un piètement avec ses saignées en forme de L.

La figure 5 représente un piètement avec ses saignées en forme de L et ses saignées de coordination de mouvement.

La figure 6 représente un visuel avec ses manetons de suspension ainsi que ses tétons de guidage.

La figure 7 représente un visuel dans sa position basse.

La figure 8 représente un visuel dans sa position haute.

La figure 9 représente un mode de réalisation du système de commande des tétons de guidage.

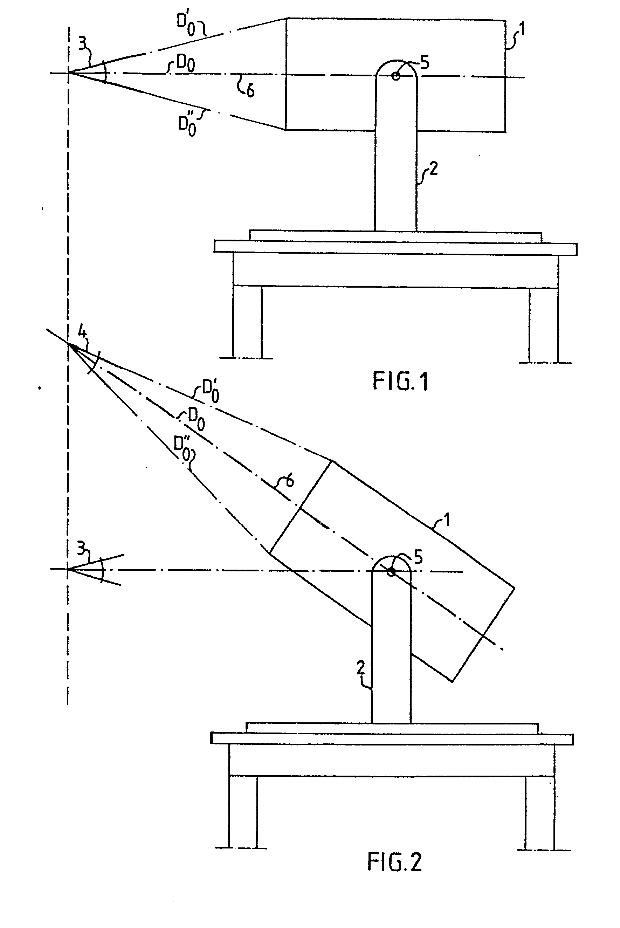

La figure 1 représente un ensemble de visualisation tel qu'on le rencontre dans les systèmes de traitement de données. Cet ensemble comporte 2 parties principales:

— le visuel (1) proprement dit qui présente une forme sensiblement parallèlépipédique
— le piètement (2) du visuel qui a une forme de U.

Le piètement (2) sert de support au visuel (1). Le visuel (1) est articulé sur son piètement (2) afin de permettre à l'opérateur qui le lit de le positionner pour une lecture plus facile.

Pour une lecture optimale de toute la surface de l'écran cathodique, il faut que l'oeil (3) de l'opérateur se trouve situé sur une ligne (6) passant par le centre de l'écran et dont la direction est sensiblement perpendiculaire au plan tangent au centre de l'écran cathodique: cette ligne (6) sera appelée par la suite: axe central de lecture. Quand l'oeil (5) de l'opérateur se trouve sur l'axe (6) central de lecture, la distance qui sépare l'oeil (3) de l'opérateur à la surface à lire présente la plus petite variation au cours de la lecture de la totalité de la dite surface à lire. Comme aux distances rapprochées l'oeil effectue un effort d'accomodation, cet effort se trouve réduit quand l'oeil se trouve placé sur l'axe (6) principal de lecture.

La figure 1 représente le cas particulier où l'axe (6) principal de lecture est horizontal et où l'oeil de l'opérateur se trouve naturellement sur cette ligne (6). Cette situation n'est pas toujours réalisée et il arrive, comme il est représenté sur la figure 2, que l'opérateur soit amené à incliner le visuel (1) sur son piètement (2) pour amener l'axe

**0 055 662**

(6) principal de lecture à passer par son oeil (4).

La figure 2 montre que l'inclinaison du visuel (1) est obtenue par la rotation de ce dit visuel (1) autour d'un axe 5 qui est perpendiculaire aux cotes du visuel (1). Cette rotation est permise par le mode de fixation du visuel (1) sur son piètement (2). Dans cette position inclinée, la distance qu sépare l'oeil (4) de l'opérateur de la surface à lire s'est accrue par rapport à celle qui existe dans la position horizontale de la figure 1. Cet accroissement de distance est un inconvénient pour la lecture du visuel car il peut entraîner des difficultés d'accommodation de l'oeil.

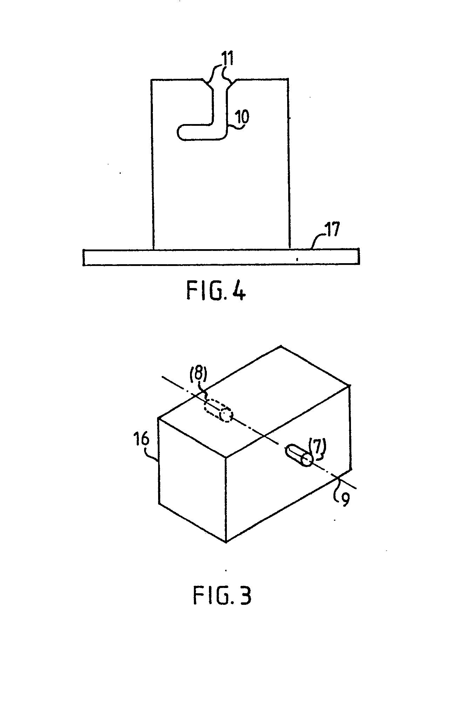

La figure 3 est une représentation schématique d'un visuel réalisé suivant l'un des enseignements de l'invention. Dans ce mode de réalisation, le visuel (16) porte sur chacune de ses deux faces latérales, une pièce cylindrique ((7) et (8)) qui sera appelé par la suite maneton de suspension. Ces deux manetons ((7) et (8)) sont placés sur le même axe qui est l'axe (9) de suspension du visuel (16). Cet axe (9) de suspension passe sensiblement par le centre de gravité du visuel (16). De la sorte, si le visuel (16) est maintenu par les deux manetons ((7) et (8)), il se trouve dans un équilibre quasi indifférent autour de l'axe (9) de suspension. Il en résulte que pour faire tourner le visuel (16) autour de l'axe (9) de suspension, l'effort à exercer est réduit.

La figure 4 est une vue latérale schématique d'un piètement (17) réalisé suivant l'un des enseignements de l'invention. Ce piètement (17) a également une forme de U dont les branches verticales vont servir à supporter le visuel (16). Dans chaque branche verticale du U, qui seront appelée par la suite les ailes du piètement, est pratiquée un saignée (10) en forme de L dont la branche horizontale est inversée sur la figure c'est-à-dire dirigée de la droite vers la gauche. La branche verticale du L débouche à l'extrémité supérieure de l'aile du piètement concerné par un évasement (11) allant en s'élargissant vers le haut. Cet évasement (11) est destiné à faciliter l'introduction du maneton ((7) et (8)) de suspension lors de la mise en place du visuel (16) dans le piètement (17).

La mise en place du visuel (16) dans le piètement (17) s'effectue en plaçant le visuel (16) au dessus du piètement (17) de manière à ce que les manetons ((7) et (8)) se trouvent chacun en face de l'évasement (11) situé dans l'aile du piètement qui lui correspond. Quand les manetons ((7) et (8)) sont ainsi placés, le visuel (16) est descendu de sorte que les manetons ((7) et (8)) parcourent la branche verticale du L jusqu'à toucher la partie horizontale de la saignée (10) qui se trouve à la jonction de la branche verticale et de la branche horizontal du L. Dans cette position, le visuel (16) occupe une position relativement stable et il peut accomplir deux sortes de mouvements indépendants:

. un mouvement de rotation autour de l'axe des manetons ((7) et (8)). Cet axe est l'axe (9) de suspension du visuel

. un mouvement de translation horizontal par déplacement des manetons ((7) et (8)) dans la branche horizontale de la saignée (10).

Comme il a été dit précédemment lors des explications fournies à l'occasion de la description de la figure 2, lorsque l'opérateur incline un visuel (1) de la conception antérieure de l'invention afin de faire passer l'axe (6) central de lecture par le centre de son oeil (4). Cela se traduit par un allongement de la distance de vision c'est-à-dire de la distance qui sépare son oeil (4) de la surface à lire.

Dans le dispositif proposé dans les figures 3 et 4, le visuel peut être déplacé suivant 2 degrés de liberté. Au cours de l'opération de réglage du visuel l'opérateur peut ajuster:

— l'inclinaison du visuel (16) sur son axe (9) de suspension pour faire passer l'axe (6) principal de lecture par son oeil (4)
— la position du visuel (16) le long de la branche horizontale de la saignée (10) pour ajuster la distance entre la surface à lire et son oeil (4).

Il apparaît clairement ici que le dispositif de l'invention permet à l'opérateur de pouvoir disposer de 2 moyens pour avoir une meilleure lecture du visuel.

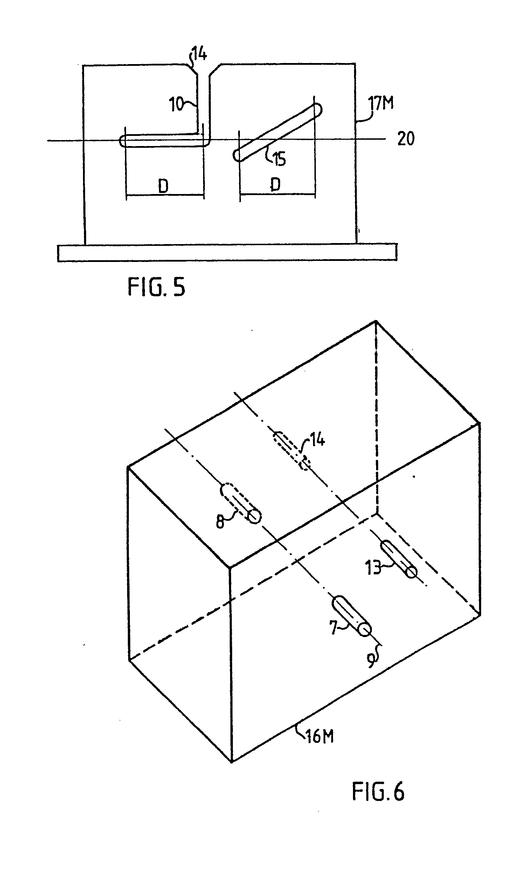

La figure 5 représente un autre progrès réalisé par une variante de la présente invention. Dans cette variante le piètement (17) est modifié comme réprésenté en (17M). Ce piètement (17M) modifié comporte une saignée en forme de L comme le piètement (17). Ce piètemente (17M) comporte en plus une seconde saignée (15) qui a été dessinée rectiligne par souci de simplicité de dessin mais dont la forme peut être courbe de manière à optimiser les conditions de lisibilité du visuel. Cette seconde saignée (15) sera appelée par la suite saignée (15) de coordination des mouvements du visuel (164) modifiée en raison de la fonction qu'elle remplit dans le fonctionnement du dispositif de l'invention. Cette saignée (15) de coordination des mouvements du visuel (16M) modifiée se trouve à l'opposé de la branche horizontale du L de la saignée (10) et est située de part et d'autre d'une ligne de référence (20). La forme de la saignée (15) de coordination des mouvements du visuel (16M) ainsi que son inclinaison générale sur la ligne horizontale (20) de référence sont fonctions des lois régissant la meilleure lisibilité du visuel. Il peut être dit que si la branche horizontale de la saignée (10) a une largeur D, la projection sur la ligne horizontale (20) de référence de la saignée (15) de coordination des mouvements du visuel (16M) aura elle aussi une longueur approximativement égale à D.

Sur la figure 6 est représenté le visuel (16M) modifié permettant l'utilisation de la saignée (15) de coordination des mouvements du visuel évoquée ci-dessus. Ce visuel (16M) modifié comporte sur chacune de ses faces latérales, en plus du maneton de suspension, un téton ((13) et (14)) de guidage. Ces tétons de guidage ((13) et (14)) sont destinés à venir se loger dans les saignées (15) de coordination des mouvements du visuel. Ces tétons ((13) et (14)) de guidage sont soit amovibles, soit rétractables afin de permettre la mise en place du visuel (16M) dans son piètement (17M).

Pour mettre en place le visuel (16M) dans le piètement (17M) la première opération à réaliser est le retrait des tétons ((13) et (14)) de guidage: ce retrait peut s'effectuer, comme il vient d'être dit, soit par démontage, soit par escamotage mécanique. Une fois le visuel (16M) positionné dans le piètement (17M) c'est-à-dire quand les manetons ((7) et (8)) de suspension reposent sur la branche horizontale de la saignée (10) il est possible de repositionner ou de remettre en place les tétons ((13) et (14)) de guidage de manière qu'ils viennent s'introduire dans les saignées (15) de coordination des mouvements du visuel.

Dans ces conditions il apparaît clairement que lorsque l'opérateur manoeuvre le visuel (16M) en faisant varier son inclinaison sur l'horizontale, cette inclinaison s'accompagne d'un mouvement horizontal correspondant du visuel. Ce mouvement horizontal du visuel est imposé par le déplacement des tétons de guidage ((13) et (14)) dans les saignées (15) de coordination des mouvements du visuel.

Ainsi moyennant que les saignées (15) de coordination des mouvements du visuel aient un profil approprié, il y a rattrapage de la distance de lecture quelque soit l'angle d'inclinaison du visuel dans les limites imposées par la longueur des saignées (15) de coordination des mouvements.

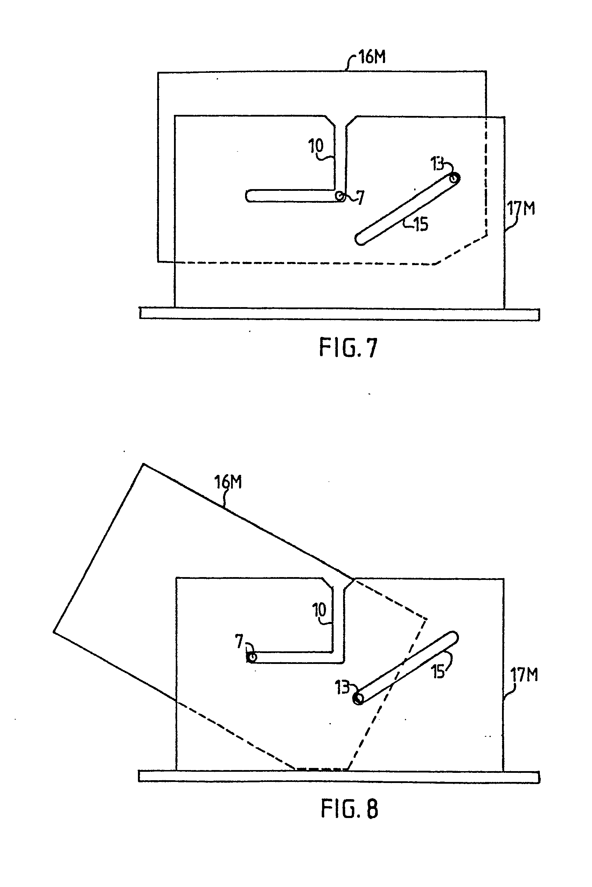

La figure 7 illustre le visuel (16M) dans son piètement (17M) quand le visuel (16M) occupe une position horizontale. Il y apparaît que les manetons ((7) et (8)) de suspension sont en butée à l'intersection des deux branches du L de la saignée (10) et les tétons ((13) et (14)) sont en butée à l'extrémité supérieure de la saignée (15) de coordination des mouvements du visuel. Dans cette position le visuel se trouve placé dans sa position la plus reculée dans son piètement (17M).

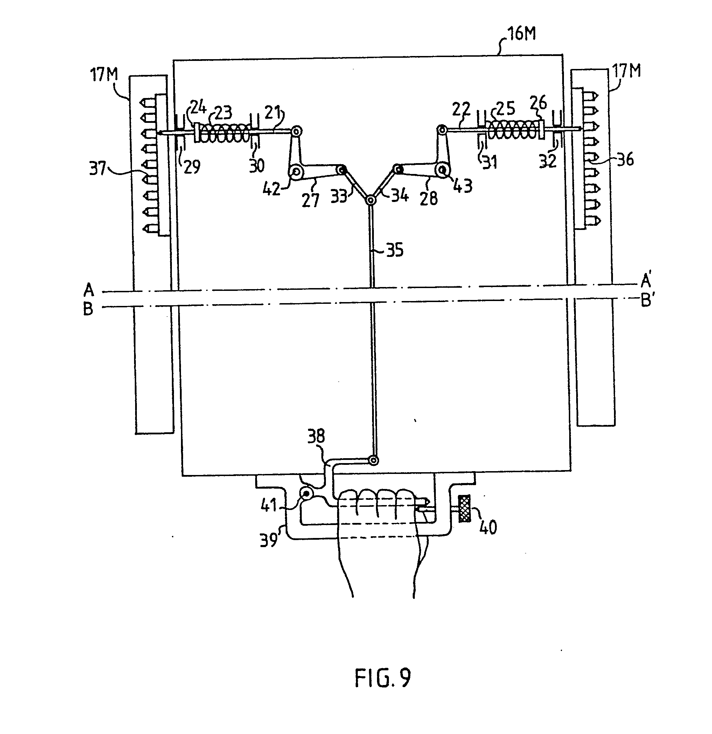

La figure 8 illustre le visuel (16M) dans son piètement (17M) quand le visuel (16M) occupe la position la plus inclinée permise par la réalisation décrite. Dans cette position les manetons ((7) et (8)) de suspension sont en butée à l'extrémité gauche de la branche du L de la saignée (10) et les tétons ((13) et (14)) sont en butée à l'extrémité inférieure de la saignée (15) de coordination des mouvements du visuel. Dans cette position le visuel se trouve dans la position la plus avancée dans son piètement (17M).

La comparaison des figures 7 et 8 montre bien le mouvement accompli par le visuel quand son inclinaison sur l'horizontale varie.

La figure 9 est une vue supérieure et en coupe du visuel (16M) en place dans son piètement (17M). Cette figure illustre un mode de réalisation d'un dispositif d'escamotage des tétons de guidage permettant l'insertion du visuel (16M) dans son piètement (17M). Par ailleurs, le dispositif illustré comporte un moyen d'immobiliser le visuel (16M) suivant certaines inclinaisons. Sur cette figure les tétons de guidage sont représentés par 2 tiges (21) et (22) coulissant dans les paliers de guidage ((29) et (30) pour la tige (21), (31) et (32) pour la tige (22)). Les saignées de guidage ((36) et (37)) sont constitués chacune d'une saignée borgne pratiquée dans l'épaisseur du piètement (17M). Au fond de chaque saignée sont exécutés des trous borgnes dans lesquels peuvent venir se loger les tétons de guidage ((21) et (22)). Ainsi est réalisé une immobilisation ponctuelle du visuel (16M).

Par souci de simplification seul le fonctionnement de la partie droite de la figure 9 va être décrit. Le fonctionnement de la partie gauche s'en déduit aisément. Le téton de guidage (22) est appuyé au fond de la saignée (36) par un ressort (25) de rappel prenant appui d'une part sur le palier (31) et d'autre part sur une bague (26) solidaire du téton de guidage (22). L'extrémité gauche du téton de guidage est rattachée à une brellette coudée (28) qui est articulées autour d'un axe (43) situé à l'endroit du coude. L'autre extrémité de cette brellette coudée (28) est rattachée à une brellette droite (34). L'autre extrémité de cette brellette droite (34) est rattachée à une tige (35) de commande. L'autre extrémité de cette tige de commande (35) est rattachée à un levier de commande (38) ayant une forme rappelant celle d'un diapason dont une des branches a été coupée. Ce levier de commande (38) est placé à l'intérieur de la poignée (39) de manoeuvre du visuel auquel il est rattaché par une articulation (41) situé sur le pied du "diapason" (38). La branche coupée du diapason (38) est celle qui est raccordée à la tige de commande (35). La branche longue du "diapason" (38) est celle sur laquelle l'opérateur agit pour escamoter les tétons ((21) et (22)) de guidage. La course de la branche longue du "diapason" (38) est limitée par une butée (40) située sur la poignée (39) de manoeuvre du côté opposé de l'articulation (41) du diapason. La butée (40) est tenue en place par un ressort non représenté sur la figure. Pour permettre un plus grand débattement du "diapason" (38) il suffit de tirer la butée (40) vers la droite ce qui libère le passage de l'extrémité de la branche longue du "diapason" (38). En relachant la butée (40) alors que l'extrémité de la branche longue du "diapason" (38) est tenue à sa position extrême, c'est-à-dire vers le bas dans le cas de la figure, le "diapason" (38) se trouve verrouillé dans cette "position extrême". Pour libérer le "diapason" (38) il suffit de tirer vers la droite la butée (40), les ressorts de rappel ((23) et (25)) ramenant le "diapason" (38) dans sa position de repos.

De ce qui vient d'être dit il est facile d'expliquer le fonctionnement de ce dispositif. Le dispositif peut occuper trois états:

. L'état de repos dans lequel les tétons ((21) et (22)) de guidage sont enfoncés chacun dans un des trous borgnes des saignées de guidage ((36)

7    0 055 662    8

et (37)). Dans cet état le visuel (16M) se trouve maintenu dans une position fixe

. L'état de changement d'inclinaison du visuel dans lequel les tétons ((21) et (22)) de guidage sont sortis des trous borgnes sans pour autant être sortis des saignées de guidage ((36) et (37)). Dans cet état le visuel peut être incliné à volonté par l'opérateur, la coordination des mouvements étant assurée par la coopération des tétons ((21) et (22)) et des saignées de guidage ((36) et (37))

. L'état de mise en place ou de retrait du visuel (16M) de son piètement (17M). Dans ce cas les tétons ((21) et (22)) sont complètement sortis des saignées de guidage ((36) et (37)). Dans cet état l'opérateur peut librement poser ou retirer le visuel (16M) de son piètement (17M).

L'état de repos est obtenu quand le "diapason" est libéré c'est-à-dire que ni la butée (40) ni la main de l'opérateur empêchent l'action des ressorts ((23) et (25)) de rappel. Ces ressorts ((23) et (25)) de rappel pousse les tétons de guidage ((21) et (22)) au fond du trou borgne qui se trouve en face de ces tétons de guidage ((21) et (22)) étant entendu que cette condition est réalisée par l'opérateur ne serait ce que par un léger mouvement d'oscillation du visuel (16M) autour de son axe de suspension.

L'état de changement d'inclinaison du visuel est obtenu par une action manuelle de l'opérateur sur la branche borgne du "diapason" (38). En tirant vers lui cette branche borgne du "diapason" (38) l'opérateur produit un basculement, vers le bas sur la figure, du "diapason" (38). L'amplitude de ce basculement vers le bas du diapason (38) est limitée par la butée (40) qui s'oppose à un plus grand déplacement de la tige longue du "diapason" (38). Cette limitation d'amplitude est prévue de telle sorte que le retrait des tétons de guidage ((21) et (22)) qui va en résulter sera limité à l'engagement des tétons de guidage ((21) et (22)) dans les trous borgnes.

Le retrait des tétons de guidage ((21) et (22)) résulte des opérations suivantes:

Le basculement du "diapason" (38) entraîne, vers le bas sur la figure, le levier de commande (38). Ce levier de commande (38) transmet ce mouvement à la brellette droite (34) qui à sont tour le transmet à la brellette coudée (28). La brellette coudée (28) oscille alors autour de son axe (43) entraînant le téton de guidage (22) qui comprime un ressort de compression (25). Comme il a été expliqué plus haut le mouvement de retrait du téton (22) de guidage est juste suffisant pour qu'il sorte du trou borgne où il étant logé. A ce moment là le visuel (16M) est libre d'osciller autour de son système de suspension mais l'action des tétons de guidage ((22) et (23)) dans les saignées (15) de coordination des mouvements du visuel est conservée.

Le troisième état qui est l'état de mise en place ou de retrait du visuel (16M) de son piètement (17M) est obtenu par une action de l'opérateur sur le "diapason" (38) qui amène celui-ci au-delà de la position définie par la butée (40). Cette action est rendu possible par l'effacement de la butée (40). Cet effacement de la butée (40) est obtenu par une traction, vers la droite sur la figure, de la tête de la butée (40). Une fois l'effacement de la butée (40) réalisé l'opérateur peut basculer le "diapason" (38) jusqu'à sa position extrême. Par les mêmes mécanismes que ceux décrits précédemment ce mouvement se traduit par un retrait des tétons de guidage ((21) et (22)). Mais cette fois-ci, le basculement du "diapason" étant plus grand, le retrait des tétons de guidage ((21) et (22)) est plus grand et ceux-ci sortent complètement des saignées de guidage ((36) et (37)). A ce moment là plus rien ne s'oppose à l'introduction ou au retrait du visuel (16M) de son piètement (17M).

Bien entendu, l'invention n'est nullement limitée au mode de réalisation décrit et représenté et comprend tous les équivalents techniques des moyens décrits ainsi que leur combinaison si celles-ci sont effectuées suivant les revendications qui suivent.

**Revendications**

1. Système de visualisation constitué d'un visuel (16M) mobile autour d'un axe horizontal (9) et suspendu sur un piètement (17M) auquel deux ailes verticales donnent la forme de U, ledit axe horizontal (9) passant sensiblement dans la région du centre de gravité du visuel (16M), caractérisé en ce qu'il comporte:

— des moyens pour assurer ladite suspension rotative du visuel constitués par deux tenons cylindriques (7, 8) respectivement fixés sur deux côtés opposés du visuel et venant chacun s'insérer dans une saignée (10) en forme de L pratiquées dans une des ailes du U du piètement (17M), les branches verticales des L venant déboucher à la partie supérieure des ailes du U de manière à permettre l'insertion desdits tenons cylindriques (7, 8), et les branches horizontales des L permettant un mouvement additionnel de translation horizontale du visuel (16M), et

— des moyens de coordination des mouvements du visuel constitués par des tenons de guidage additionnels (21, 22) fixés sur lesdits côtés du visuel (16M) et insérés dans des saignées additionnelles (15; 36, 37) pratiquées dans les ailes du U du piètement (17M), la direction générale desdites saignées (15; 36, 37) étant inclinée sur l'horizontale de manière à ce que tout mouvement de basculement du visuel (16M) entraîne un déplacement des tenons de guidage dans lesdites saignées inclinées, ce qui provoque à son tour un déplacement desdits tenons cylindriques (7, 8) le long des branches horizontales desdites saignées en forme de L et ainsi un mouvement associé de translation horizontale dudit visuel (16M).

2. Système de visualisation selon la revendication 1, caractérisé en ce que les tenons de guidage (21, 22) sont mobiles pour permettre l'introduction ou l'extraction du visuel (16M) de son piètement (17M).

3. Système de visualisation selon l'une des revendications précédentes caractérisé en ce que les tenons de guidage (21, 22) viennent se placer dans des alvéoles pour immobiliser le visuel (16M) dans une position choisie par l'opérateur.

## Patentansprüche

1. System zur Sichtdarstellung, gebildet aus einem Sichtgerät (16M), das um eine waagerechte Achse (9) beweglich und in einer Halterung (17M) aufgehängt ist, der zwei vertikale Flügel die Gestalt eines U verleihen, wobei die genannten waagerechte Achse (9) im wesentlichen durch das Gebiet des Schwerpunktes des Sichtgeräts (16M) hindurchgeht, dadurch gekennzeichnet, daß es umfaßt:

— Mittel zur Gewährleistung der genannten drehbaren Aufhängung des Sichtgeräts, welche gebildet sind aus zwei zylindrischen Zapfen (7, 8), die auf der einen bzw. der anderen der zwei einander gegenüberliegenden Seiten des Sichtgerätes befestigt sind und jeweils in eine L-förmige Rinne (10) eingreifen, die in einem der Flügel des U der Halterung (17M) angebracht sind, wobei die senkrechten Abschnitte des L am oberen Teil der Flügel des U ausmünden, so daß das Einschieben der genannten zylindrischen Zapfen (7, 8) ermöglicht wird, und die waagerechten Abschnitte des L eine zusätzliche waagerechte Translationsbewegung des Sichtgerätes (18M) gestatten, und
— Mittel zum Koordinieren der Bewegungen des Sichtgerätes, welche gebildet sind aus zusätzlichen Führungszapfen (21, 22), die an den genannten Seiten des Sichtgerätes (16M) befestigt und in zusätzliche Rinnen (15; 36, 37) eingeführt sind, welche in den Flügeln des U der Halterung (17M) angebracht sind, wobei die allgemeine Richtung der genannten Rinnen (15; 36, 37) gegen die Waagerechte derart geneigt ist, daß jegliche Verschwenkungsbewegung des Sichtgerätes (16M) eine Bewegung der Führungszapfen in den genannten geneigten Rinnen nach sich zieht, wodurch wiederum eine Bewegung der zylindrischen Zapfen (7, 8) längs der waagerechten Abschnitte der genannten L-förmigen Rinnen und auf diese Weise eine zugeordnete waagerechte Translationsbewegung des Sichtgeräts (16M) hervorgerufen wird.

2. System zur Sichtdarstellung nach Anspruch 1, dadurch gekennzeichnet, daß die Führungszapfen (21, 22) beweglich sind, um die Einführung oder das Herausnehmen des Sichtgerätes (16M) aus seiner Halterung (17M) zu gestatten.

3. System zur Sichtdarstellung nach einem der vorstehenden Ansprüche, dadurch gekennzeichnet, daß die Führungszapfen (21, 22) in Kerben eingreifen, um das Sichtgerät (16M) in einer vom Benutzer gewählten Stellung zu immobilisieren.

## Claims

1. A visual display system comprising a visual display unit (16M) movable about a horizontal axis (9) and suspended on a support (17M) which has the shape of an U imparted to it by two vertical wings, the said horizontal axis (9) passing substantially through the region of the centre of gravity of the visual display unit (16M), characterised in that it comprises:

— means for effecting the said rotatable suspension of the visual display unit formed by two cylindrical tenons or stubs (7, 8) secured respectively on two opposite sides of the visual display unit and each inserted into an L-shaped slot (10) formed in one of the wings of the U of the support (17M), the vertical limbs of the L-shaped slots opening at the upper part of the wings of the U-shaped support in a manner such as to permit the insertion of the said cylindrical tenons (7, 8), and the horizontal limbs of the L-shaped slots permitting an additional horizontal translatory displacement of the visual display unit (16M), and
— means for co-ordination of the displacements of the visual display unit formed by additional guiding tenons (21, 22) secured on the said sides of the visual display unit (16M) and inserted into additional slots (15, 36, 37) formed in the wings of the U-shaped support (17M), the general direction of the said slots (15, 36, 37) being inclined with respect to the horizontal in a manner such that any tilting displacement of the visual display unit (16M) causes a displacement of the guiding tenons in the said inclined slots, which for its part causes a displacement of the said cylindrical tenons (7, 8) along the horizontal limbs of the said L-shaped slots and thus an associated horizontal translatory displacement of the said visual display unit (16M).

2. Visual display system according to claim 1, characterised in that the guiding tenons (21, 22) are movable to permit the insertion or extraction of the visual display unit (16M) into or from its support (17M).

3. Visual display system according to one of the preceding claims, characterised in that the guiding tenons (21, 22) are placed in sockets to immobilise the visual display unit (16M) in a position selected by the operative.

$D_0'$

3

$D_0$

6

1

5

2

**FIG.1**

4

$D_0'$

$D_0$

$D_0''$

6

1

3

5

2

**FIG.2**

1

11

10

17

FIG. 4

(8)

16

(7)

9

FIG. 3

FIG. 5

FIG. 6

FIG. 7

FIG. 8

0 055 662

FIG. 9